# EUROPÄISCHE PATENTANMELDUNG

(11) **EP 1 063 047 A2**
(43) Veröffentlichungstag der Anmeldung: **27.12.2000**
(21) Anmeldenummer: 00112636.6
(22) Anmeldetag: 15.06.2000
(51) Int. Cl.: B23K 26/00

(54) **Verfahren zum Herstellen einer Vulkanisationsform für Fahrzeugreifen und Vulkanisationsform für Fahrzeugreifen**

(30) Priorität: 26.06.1999 DE 19929333
(71) Anmelder: Continental Aktiengesellschaft, 30165 Hannover (DE)
(72) Erfinder: Blickwedel, Holger, 30625 Hannover (DE); Gonschior, Martin, 30459 Hannover (DE); Böttcher, Thomas, 30459 Hannover (DE); Borrmann, Sieghard, 31737 Rinteln (DE)

(57) **Zusammenfassung**

Die Erfindung befasst sich mit einem Verfahren zum Herstellen einer aus Formsegmenten bestehenden Vulkanisationsform für Fahrzeugreifen mit Formteilen, wie Formrippen (5, 5', 10) oder Lamellen (11, 11') , welche Strukturierungen am äußeren Bereich des Reifens, wie Nuten und Einschnitte im Laufstreifenprofil, formen. Dabei werden die Formteile (5, 5', 10, 11, 11'), welche Strukturierungen am Außenbereich des Reifens formen, auf einem Formsegment-Grundkörper (6) nach dem Verfahren des Laser-Auftragsschweißens aufgebaut bzw. erstellt. Bei einer gemäß der Erfindung ausgeführten Vulkanisationsform für Fahrzeugreifen bestehen die Formsegmente jeweils aus einem Formsegment-Grundkörper (6), auf welchem Formteile (5, 5', 10, 11, 11'), die Strukturierungen am Außenbereich des Reifens formen, durch Laser-Auftragsschweißen aufgebracht sind.

## Beschreibung

Die gegenständliche Erfindung betrifft ein Verfahren zum Herstellen einer aus Formsegmenten bestehenden Vulkanisationsform für Fahrzeugreifen mit Formteilen, wie Formrippen oder Lamellen, welche Strukturierungen am äußeren Bereich des Reifens, wie Nuten und Einschnitte im Laufstreifenprofil des Reifens, ausformen. Die Erfindung betrifft ferner eine Vulkanisationsform für Fahrzeugreifen mit Formsegmenten, die mit Formteilen, wie Formrippen oder Lamellen, zum Ausformen der Strukturierungen am Außenbereich des Reifens, wie Nuten oder Einschnitte im Laufstreifenprofil, versehen sind.

Die derzeit zur Vulkanisation von Fahrzeugreifen üblicherweise verwendeten Vulkanisationsformen bestehen aus mehreren Teilen, insbesondere aus Seitenschalen, die die Seitenwände und Wulstbereiche eines Reifens formen, und aus einer Anzahl von Umfangssegmenten, die den Laufstreifenbereich und die Schulterbereiche des Reifens formen. Dort, wo am Reifen Strukturierungen entstehen sollen, insbesondere im Laufstreifenbereich, wo das Laufstreifenprofil eingeformt werden soll, welches sich im Allgemeinen aus einer Vielzahl von Nuten - Umfangsnuten und Quernuten - und aus einer Vielzahl von Einschnitten zusammensetzt, sind an den Segmenten der Vulkanisationsform entsprechende Formrippen und Lamellen angebracht. Die einzelnen Segmente einer Vulkanisationsform werden durch Gießen aus einem verhältnismäßig niedrig schmelzenden Metall, meistens einer Aluminiumlegierung, hergestellt, wobei bei diesem Gießvorgang jene Erhebungen bzw. Rippen mitgeformt werden, durch die die breiteren Nuten am Laufstreifenprofil des Reifens geformt werden. Zum Ausformen von schmalen Einschnitten, insbesondere solchen mit einer Breite von einigen Zehntelmillimetern, werden ülicherweise Stahlblechlamellen verwendet, deren Material somit einen höheren Schmelzpunkt besitzt als das Material der Formsegmente, so dass die Blechlamellen beim Herstellen der Segmente in die Segmentwandungen eingegossen werden können.

In der DE 197 49 565 C1 ist ferner vorgeschlagen worden, Reifenformsegmente, die zum Abformen des Laufstreifenprofils eines Fahrzeugluftreifens vorgesehen sind, nach einem Laser-Sinter-Verfahren herzustellen. Dabei wird durch Sintern von Schichten eines Metallpulvers mittels Laserstrahlung das Reifenformsegment schichtweise aufgebaut. Dieser Vorgang wird über einen Rechner gesteuert, der auf Grund eines Konstruktionsprogrammes oder dergleichen die Daten über die Form des Objektes, des Reifenformsegmentes, abgespeichert hat. Die Daten sind dabei so aufbereitet, dass das Reifenformsegment in eine Vielzahl von horizontalen, dünnen Schichten zerlegt wird und die Formdaten für jede dieser Schichten bereitgestellt werden. Mit diesem Verfahren lassen sich zwar massive Strukturen aufbauen, aber es ist nicht möglich, relativ schmale, unter 2 Millimeter breite Bauteile - Formrippen oder Lamellen - dauerhaltbar herzustellen. Dies ist auch der Grund, warum bei dieser bekannten Lösung vorgeschlagen wird, die Lamellen gesondert herzustellen, um sie nachträglich in die nach dem Laser-Sinter-Verfahren hergestellten Reifenformsegmente einzusetzen, wobei zu diesem Zweck in den Reifenformsegmenten besonders ausgestattete Hohlräume vorgesehen werden. Es ist daher kaum möglich, nach dieser Methode Reifenformen mit einem wirtschaftlich vertretbaren Aufwand herzustellen. Dieses Verfahren eignet sich voraussichtlich nur in Einzelfällen, beispielsweise für Versuchszwecke, zur Herstellung von Reifenvulkanisationsformen.

Die Erfindung hat sich nun die Aufgabe gestellt, ein Verfahren zur Herstellung einer Vulkanisationsform für Fahrzeugreifen vorzuschlagen, mit dem sämtliche jener Formteile, insbesondere auch klein dimensionierte Teile einer Reifenform, mit denen an der Außenfläche des Reifens Strukturierungen gebildet werden, wirtschaftlich herstellbar sind. Die Erfindung hat sich auch die Aufgabe gestellt, eine entsprechende und mit wirtschaftlich vertretbarem Aufwand herstellbare Vulkanisationsform bereitzustellen.

Was das Verfahren betrifft, wird die gestellte Aufgabe erfindungsgemäß dadurch gelöst, dass Formteile, welche Strukturierungen am Außenbereich des Reifens formen, auf einem Formsegment-Grundkörper nach dem Verfahren des Laser-Auftragsschweißens aufgebaut bzw. erstellt werden.

Was die Vulkanisationsform betrifft, wird die Aufgabe erfindungsgemäß dadurch gelöst, dass die Reifenformsegmente jeweils aus einem Formsegment-Grundkörper bestehen, auf welchem Formteile, die Strukturierungen in der Außenfläche des Reifens ausformen, durch Laser-Auftragsschweißen aufgebracht sind.

Das Laser-Auftragsschweißen, bei dem im Laserstrahl geschmolzenes Pulver in "Nähten" aufgetragen wird, ist ein Verfahren, welches es gestattet, auch sehr dünnwandige Formteile exakt und dauerhaltbar herzustellen. Darüber hinaus lassen sich mit diesem Verfahren komplexe, dreidimensionale Strukturen bilden, was es ermöglicht, auch komplizierte Lamellenkonfigurationen mit einem wirtschaftlich vertretbaren Aufwand zu erzeugen.

Erfindungsgemäß hergestellte bzw. ausgeführte Vulkanisationsformen gestatten daher das Ausbilden von nahezu beliebigen Strukturen am Reifen, was insbesondere für den Bereich des Laufstreifenprofils von immenser Bedeutung ist. Etwaige Grenzen sind dabei lediglich durch den nach der Vulkanisation stattfindenden Entformungsvorgang gegeben, welcher ohne Beschädigungen des fertigen Reifens möglich sein soll.

Das Verfahren des Laser-Auftragsschweißens eröffnet nun die Möglichkeit, Formteile, insbesondere die etwas größer dimensionierten Formteile wie Nuten formende Formrippen, als innen hohle Teile aufzubauen bzw. zu bilden.

Um diese Hohlräume nutzen zu können, ist es zweckmäßig, die betreffenden Formrippen an den Stirnseiten der Formsegmente bzw. des Formsegement-Grundkörpers geschlossen auszuführen.

Aus diesem Grund werden auch erfindungsgemäß hergestellte Vulkanisationsformen mit Zu- bzw. Ableitungen in ihren Formsegement-Grundkörpern versehen, um eine Versorgung, ein Durchströmen der Hohlräume in den Formrippen mit einem gasförmigen oder einem flüssigen Medium durchführen zu können.

Vorteilhafterweise können dabei die Hohlräume und die Zu- bzw. Ableitungen Bereiche von einzelnen, auch voneinander getrennten Versorgungskreisen sein. Diese Maßnahme gestattet ein gezieltes Versorgen bzw. Durchströmen von Versorgungskreisen mit einem gasförmigen oder einem flüssigen Medium.

Erfindungsgemäß ausgeführte Vulkanisationsformen weisen daher Formteile, insbesondere Formrippen auf, die zumindest zum Teil mit Hohlräumen versehen sind und die über Zu- und Ableitungen im Formsegement-Grundkörper mit einem Medium befüll- und/oder durchströmbar sind und in Versorgungskreise eingebunden sind.

Bei einer weiteren erfindungsgemäßen Ausführungsvariante können Formrippen mit zwei voneinander durch eine insbesondere mittige Trennwand getrennten Hohlräumen vorgesehen werden.

Je nach Ausführung dieser Hohlräume und nach deren Verlauf können diese nun zu dem selben oder zu voneinander getrennten Versorgungskreisen gehören. Durch eine Zufuhr von Heizmedium kann derart sehr gezielt auf die Vulkanisation der mit den Formrippen in Kontakt tretenden Bereiche des zu vulkanisierenden Reifens Einfluss genommen werden und sozusagen eine Zonenheizung mit der jeweils erwünschten Temperatur durchgeführt werden.

Um bei Ausführungen, wo Kreuzungsbereiche zweier Formrippen vorliegen, eine gute Versorgung mit dem zugeleiteten Medium in diesen Formrippen sicherzustellen, ist es von Vorteil, wenn in einer dieser Formrippen eine umleitende Trennwand vorgesehen ist.

Bei einer zweiten vorteilhaften Ausführungsform der Erfindung sind die Hohlräume in den Formrippen über Mikroöffnungen, die insbesondere eine Breite in der Größenordnung von einigen Hundertstelmillimetern aufweisen, mit der Formsegmentinnenseite in Verbindung. Diese Mikroöffnungen können zum Abführen von beim Einformen des Reitens eingeschlossener Luft dienen und dabei zusätzlich, zur Unterstützung der Entlüftungswirkung, unter Unterdruck gesetzt werden. Nach der Vulkanisation kann über die Mikroschlitze Überdruck ausgeübt werden, wodurch der Entformungsvorgang unterstützt werden kann.

Weitere Merkmale, Vorteile und Einzelheiten der Erfindung werden nun anhand der Zeichnung, die mehrere Ausführungsbeispiele darstellt, näher beschrieben. Die einzelnen Zeichnungsfiguren sind schematische und nicht maßstabsgetreue Darstellungen. Dabei wird die in Fig. 1 gezeigte Draufsicht auf eine Teilabwicklung eines Laufstreifenprofils für einen Fahrzeugluftreifen dafür herangezogen, die in den Fig. 2 bis 6 dargestellten Ausführungsformen einer erfindungsgemäß ausgeführten Vulkanisationsform näher zu erläutern. Diese Zeichnungsfiguren sind entweder Schnittdarstellungen von Teilen bzw. Details einer Vulkanisationsform für Fahrzeugreifen oder Schrägansichten von solchen Teilen bzw. Details. Fig. 7a und 7b zeigen Schrägansichten von zum Formen von Einschnitten im Laufstreifenprofil eines Reifens vorgesehene Lamellen, die gemäß dem erfindungsgemäßen Verfahren herstellbar sind.

Die gegenständliche Erfindung befasst sich insbesondere mit der erfindungsgemäßen Anwendung eines grundsätzlich bekannten Verfahrens, des Verfahrens des Lasers-Auftragsschweißens, bei der Herstellung jener Teile - insbesondere Formrippen und Lamellen - von Vulkanisationsformen für Reifen, die Strukturierungen am Außenbereich des Reifens, insbesondere das Laufstreifenprofil des Reifens, formen. Die gegenständliche Erfindung betrifft ferner erfindungsgemäße Ausgestaltungen von unter der Anwendung dieses Verfahrens hergestellten Vulkanisationsformen für Reifen.

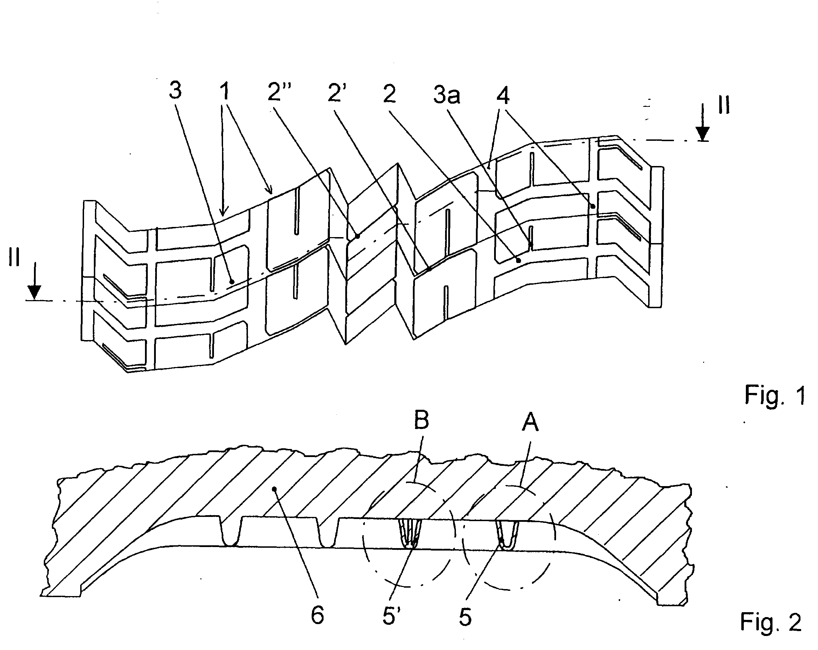

Das Laufstreifenprofil, von dem in Fig.1 zwei Profilschrittlängen (Pitches) dargestellt sind, ist nicht Gegenstand der vorliegenden Erfindung und gehört jenem Typ von Profilen an, wie sie aus dem Stand der Technik in ähnlichen Varianten bereits bekannt sind. Dieses Laufstreifenprofil umfasst eine Anzahl von in Umfangsrichtung verlaufenden Blockreihen 1, die in bekannter Weise durch Quernuten 2, 2' unterschiedlicher Breite oder durch schmälere Einschnitte 2'' in Blöcke 3 gegliedert sind. Dabei sind eine schulterseitig verlaufende Blockreihe 1, eine entlang des Reifenäquators verlaufende Blockreihe 1 und je eine in jeder Laufstreifenhälfte zwischen diesen Blockreihen 1 verlaufende weitere Blockreihe 1 vorgesehen. Untereinander sind die Blockreihen 1 durch in Umfangsrichtung gerade verlaufende Umfangsnuten 4 voneinander getrennt. Mit Ausnahme der Blöcke in der entlang des Reifenäquators verlaufenden Blockreihe sind die Blöcke 3 der anderen Blockreihen 1 jeweils mit einer Sacknut 3a versehen, die hier von einer Quernut 2, 2' ausgehend in den Block 3 hinein verläuft.

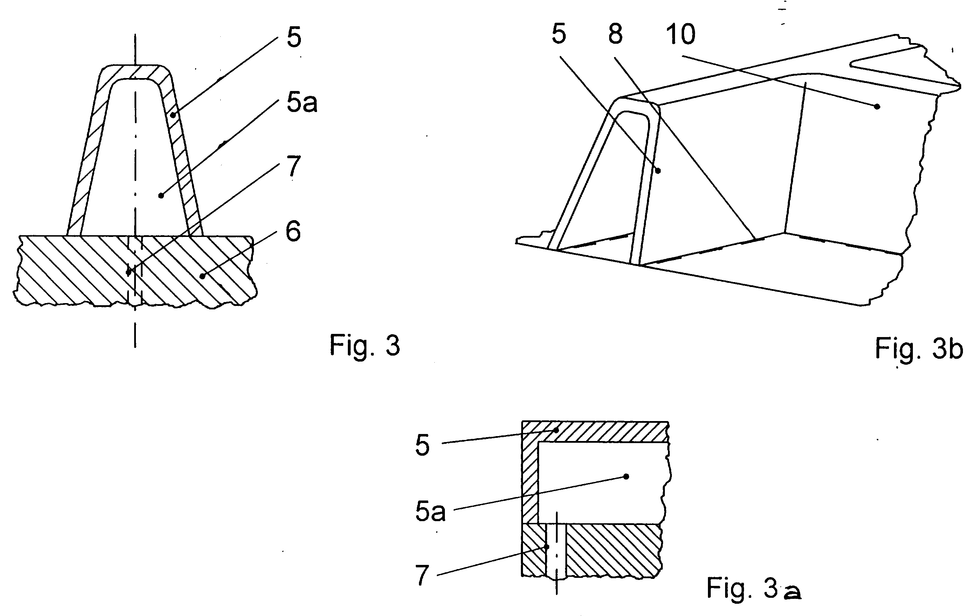

Das in Fig. 2 im Querschnitt dargestellte Reitenformsegment ist eines der Segmente für eine in bekannter Weise radial geteilte, im Allgemeinen 6 bis 9 derartige, das komplette Profil eines Reifens formende Segmente aufweisende Vulkanisationsform.

Fig. 2 zeigt nun einen Querschnitt durch ein Reifenformsegment zum Formen des Laufstreifenprofils aus Fig. 1, wobei an dieser Stelle der Laufstreifen entlang der in Fig. 1 strichliert eingezeichneten Linie II-II gebildet wird. Fig. 2 zeigt daher einen Schnitt durch einen Formsegment-Grundkörper 6 und durch jene Formrippen 5, 5', die die Umfangsnuten 4 formen. In den weiteren Zeichnungsfiguren wird auch auf die Ausgestaltung jener Formrippen Bezug genommen, die die Quernuten 2, 2', die Sacknuten 3a etc, bilden. Zwischen den dargestellten Formrippen 5, 5' werden Bereiche von Blöcken 3 gebildet, die frei von sonstigen Strukturierungen sind.

Der Formsegment-Grundkörper 6 kann beispielsweise aus Stahl oder aus einer Aluminiumlegierung bestehen und gegossen oder anderweitig geformt werden. Auf den Grundkörper 6 sind die Formrippen 5, 5' durch Laser-Auftragsschweißen aufgebracht. Auf dieses Verfahren wird weiter unten noch näher eingegangen.

Die in Fig. 2 gekennzeichneten Details A und B sind unterschiedliche erfindungsgemäße Ausführungsvarianten der Formrippen 5, 5' und sind in den Zeichnungsfiguren 3 und 4 deutlicher dargestellt.

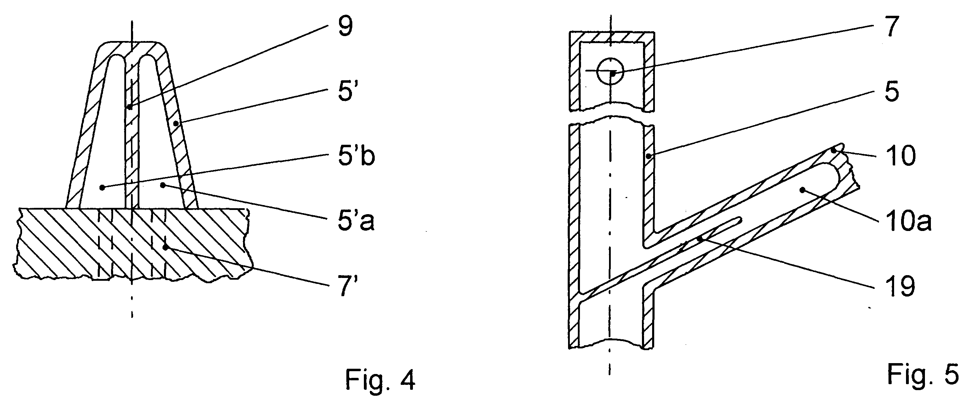

Anhand der Fig. 3, 3a, 3b sowie der Fig. 4 werden nun diese beiden Ausführungsformen der Formrippen 5, 5' näher erläutert. Fig. 3 zeigt einen vergrößerten Querschnitt (Detail A) durch die Formrippe 5 aus Fig. 2. Die Formrippe 5 ist innen hohl ausgeführt, wobei ein einziger Hohlraum 5a vorgesehen ist. Dabei sind die Wände der Formrippe 5 in einer zumindest im Wesentlichen konstanten Stärke ausgeführt, die in der Größenordnung von 0,6 mm beträgt, insbesondere zwischen 0,4 und 0,8 mm gewählt wird. Der Hohlraum 5a kann über Zu- bzw. Ableitungen 7, die den Formsegment-Grundkörper 6 durchsetzen und beispielsweise als Bohrungen ausgeführt sind, von einem Medium durchströmt werden, wobei in Fig. 3 nur eine dieser Leitungen 7 strichliert eingezeichnet ist. Fig. 3a zeigt in einem Längsschnitt durch eine Formrippe 5 die Ausgestaltung an der Formsegmentgrenze. Hier wird, um ein Fließen des zu- oder abführbaren Mediums in einem Kreislauf sicherzustellen, die Formrippe 5, wie dargestellt, an ihrer Stirnseite geschlossen. Auch Fig. 3a zeigt eine der möglichen Zu- bzw. Ableitungen 7.

Fig. 3b veranschaulicht in Schrägansicht jenen Teilbereich des Reifenformsegmentes, wo ein Kreuzungsbereich einer Formrippe 5 mit einer weiteren Formrippe 10, die beispielsweise zum Ausformen einer in die durch die Formrippe 5 gebildeten Umfangsnut 4 mündenden Quernut 2 vorgesehen ist, vorliegt.

Zusätzlich ist in dieser Zeichnungsfigur eine weitere Ausführungsvariante der Erfindung dargestellt, die darin besteht, dass im Übergangsbereich der Formrippen 5, 10 zum Grundkörper 6 Mikro-Schlitze 8 vorgesehen sind, auf deren Zweck weiter unten eingegangen wird. Die Mikroschlitze 8 werden beispielsweise durch Vertiefungen an der Innenfläche des Formsegment-Grundkörpers 6 gebildet und stellen Verbindungen zwischen den Hohlräumen in den Formrippen 5, 10 und dem Bereich außerhalb der Formrippen 5, 10 her. Diese Mikro-Schlitze 8 werden im Übergangsbereich der Formrippen 5, 10 ein- oder beidseitig ausgebildet und sind bevorzugt sehr schmal, insbesondere in einer Stärke von höchstens einigen Hundertstelmillimetern, beispielsweise 0,01 mm, ausgeführt. Die Länge dieser Mikro-Schlitze 8 beträgt vorzugsweise bis zu einigen Millimetern. Ebenso können die Mikro-Schlitze in der Formrippe angeordnet sein, beispielsweise in Form von Rücksprüngen im Anschlußbereich zum Formsegment-Grundkörper.

Bei der in Fig. 4 dargestellten Ausführungsform einer Formrippe 5' ist der Innenraum derselben durch eine Trennwand 9 in zwei Hohlräume 5'a, 5'b geteilt, die hier gleich großen Querschnitt besitzen und ebenfalls über besondere Zu- und Ableitungen 7', die hier strichliert eingezeichnet sind, mit gasförmigen oder flüssigen Medien versorgbar sind. Auch bei dieser Ausführungsvariante können Mikro-Schlitze vorgesehen werden und es werden die Formrippen 5' im Bereich der Segmentgrenzen an ihren Stirnseiten geschlossen ausgebildet.

Die Hohlräume 5a, 5'a, 5'b in den Formrippen 5, 5', 10 sind mit den Zu- bzw. Ableitungen 7, 7' Teile von Versorgungskreisen bzw. in Versorgungskreise eingebunden. Dabei wird vorgesehen, die einzelnen Hohlräume entsprechend zusammenzufassen, wobei die zwei Hohlräume einer einzelnen Formrippe zu unterschiedlichen Versorgungskreisen gehören können.

Im Rahmen der gegenständlichen Erfindung werden nun insbesondere zwei Möglichkeiten der Verwendung der Hohlräume bzw. der Versorgungskreise, in die sie eingebunden sind, in Betracht gezogen. Dies ist bei Formrippen, die ohne Mikro-Schlitze 8 versehen sind, das Durchströmen mit Heizmedium und bei Formrippen, wo Mikro-Schlitze 8 vorgesehen sind, ein Absaugen von Luft (Evakuieren) oder das Einbringen von Luft, um einen Überdruck zu erzeugen.

Wird in die Hohlräume ein Heizmedium geleitet, dies kann beispielsweise Wasserdampf oder Heißwasser sein, so kann gezielt auf die Vulkanisation der mit der bzw. den Formrippe(n) in Kontakt tretenden Bereiche, hier sind es Bereiche des Laufstreifens des in die Form eingelegten Rohreifens, Einfluss genommen werden. Es kann daher eine Zonenheizung mit der jeweils erwünschten Temperatur durchgeführt werden. Es ist ja bekannt, dass Gummi ein schlechter Wärmeleiter ist und die Vernetzungsreaktion der Mischung erst dann einsetzt, wenn eine bestimmte Temperatur über eine gewisse Zeit gewirkt hat. Es ist daher von großer Bedeutung, dass die zur Vulkanisation, zur Vernetzung, erforderliche Wärme möglichst schnell an die jeweils kritischen Bereiche, dies sind die von der Wärmequelle oder den Wärmequellen am weitesten entfernten, zu bekommen. In den bekannten Heizpressen für Fahrzeugreifen erfolgt vom Innenraum des Reifens her die Zufuhr von Wärme, indem dort Heizmedium direkt eingeleitet wird oder über einen sich in den Innenraum expandierenden Heizbalg zugeführt wird. Von außen erfolgt üblicherweise eine Zufuhr von Wärme über in der Heizpresse untergebrachte Heizplatten. Die Zufuhr von Wärme direkt in die Formrippen gestattet eine bislang nicht mögliche gewesene Steuerung und Einflussnahme auf den Vulkanisationsvorgang.

Bei einer Ausführung mit Mikro-Schlitzen 8 ist es möglich, die Hohlräume 5a, 5'a und 5'b zur Entlüftung der etwas tiefer liegenden Profilflächen zu verwenden. Die beim Einformen des Reifens eingeschlossene Luft kann über die Mikro-Schlitze 8 in die Hohlräume 5a, 5'a, 5'b entweichen und von dort abgeführt werden. Die Mikro-Schlitze 8 sind so schmal ausgeführt, dass in sie kein Gummimaterial eindringen kann. Werden die Hohlräume 5a, 5'a, 5'b in den Formrippen 5, 5' zusätzlich unter Unterdruck gesetzt, kann die Entlüftung wirkungsvoll unterstützt werden.

Nach erfolgter Vulkanisation können die Hohlräume 5a, 5'a, 5'b dafür genützt werden, Luft unter Überdruck einzubringen, um über die Mikro-Schlitze 8 den Entformungsvorgang zu unterstützen. Diese Maßnahme ist vor allem bei Reifen, wo eine größere Anzahl von schmalen Einschnitten durch Lamellen geformt wird, von besonderem Vorteil.

Eine Möglichkeit, Formrippen, die von anderen Formrippen abzweigen, besonders effektiv mit Heizmedium zu durchströmen, zeigt Fig. 5. In Fig. 5 ist dabei ein Schnitt durch eine Formrippe 5, und eine von dieser abzweigenden Formrippe 10, in deren Basisbereichen und parallel zur Innenfläche des Formsegment-Grundkörpers 6, dargestellt. Die Formrippe 5 kann eine schulterseitig gelegene Umfangsnut 4, die Formrippe 10 eine der Quemuten 2 in der Schulterblockreihe formen. Dargestellt ist dabei auch einer der Endbereiche des Reifenformsegmentes, wo die Formrippe 5 geschlossen ausgeführt ist. In diesem Bereich ist bei der dargestellten Ausführungsform auch eine der als Zu- oder Ableitung 7 dienenden Öffnungen erkennbar. Um ein Durchströmen der abzweigenden Formrippe 10 sicherzustellen, wird im Kreuzungsbereich zur Formrippe 5 ein zwangsweises Umleiten des zugeführten Mediums über eine Trennwand 19 vorgesehen. Die Trennwand 19 ragt von der dem Hohlraum 10a der Formrippe 10 gegenüberliegenden Begrenzungswand der Formrippe 5 ausgehend in die Formrippe 10 unter Teilung des in dieser verlaufenden Hohlraumes 10a. Wie dargestellt, ist die Teilung nicht über die gesamte Länge des Hohlraumes 10a der Formrippe 10 erfolgt, um den erwünschten Durchfluss zurück zur Formrippe 5 zu gewährleisten. Die in Fig. 5 dargestellte Ausgestaltung kann auch dort vorgesehen werden, wo eine Formrippe, die für das Formen einer Sacknut 3a, die in einen Laufstreifenblock oder ein Laufstreifenband verläuft, mit einem durchströmbaren Hohlraum versehen werden soll.

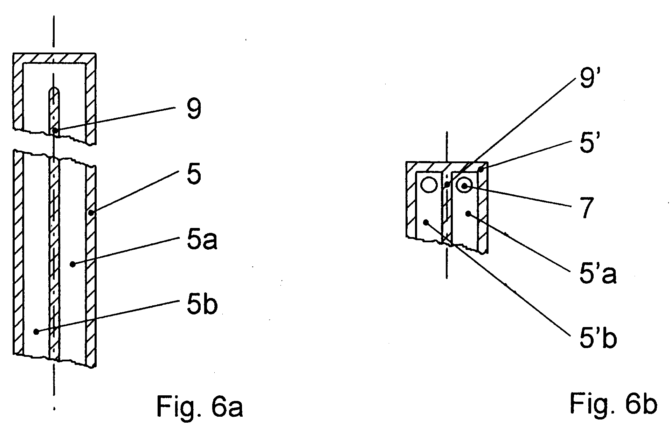

Fig. 6a und 6b zeigen weitere mögliche Alternativen der Ausführung der Hohlräume in Formrippen, um ein möglichst effektives Durchströmen von Medium sicherzustellen.

In den Fig. 6a und 6b sind dabei Schnitte durch eine Formrippe 5' in deren Basisbereich parallel zur Innenfläche des Formsegment-Grundkörpers 6, dargestellt. Bei beiden Ausführungen sind die Formrippen 5' durch Trennwände 9, 9' in zwei Hohlräume 5a, 5b, sowie 5'a, 5'b geteilt.

Auch hier sind die Formrippen 5' im Bereich der Segmentgrenzen geschlossen ausgeführt, wobei jedoch gemäß Fig. 6a die Trennwand 9 zwischen den beiden Hohlräumen 5a, 5b in der Formrippe 5' in einem Abstand von diesem Endbereich bereits endet und somit ein Durchfluss von Medium von einem Hohlraum in den anderen ermöglicht ist. Dadurch kann das Medium durch einen längeren Abschnitt einer Formrippe 5' geströmt werden und gleichzeitig die Anzahl der Zu- und Ableitungen im Formsegment-Grundkörper 6 klein gehalten werden. Bei der zweiten, in Fig. 6b dargestellten Ausführungsform reicht die Trennwand 9' bis zum geschlossenen Endbereich der Formrippe 5'. So könnte eine Ausführungsform für voneinander komplett getrennte Hohlräume 5'a, 5'b ausgeführt werden, wobei auch gesonderte Zu- und Ableitungen 7' für jeden dieser Hohlräume 5'a, 5'b vorzusehen sind. Eine derartige Trennung der Hohlräume 5'a, 5'b gestattet demnach auch eine separate Medienführung in derselben Formrippe 5', beispielsweise das Zu- und Abführen von Heizmedium mit unterschiedlichen Temperaturen.

Die die Struktur des Laufstreifenprofils ausformenden Formteile - Formrippen, ggf. Lamellen - sowie auch Trennwände werden auf den Innenflächen der Grundkörper dieser Segmente nach dem oben erwähnten speziellen Verfahren, dem Verfahren des Laser-Auftragsschweißens, direkt aufgebaut. Dieses Verfahren ist grundsätzlich bekannt und ermöglicht es, dreidimensionale Formen aus Metallpulver, beispielsweise Stahlpulver, welches durch Laser stellenweise, punktuell, geschmolzen und aufgetragen wird, aufzubauen. Das Laser-Auftragsschweißen wird dabei entsprechend vorprogrammiert und vollautomatisiert durchgeführt, so dass die gewünschten dreidimensionalen Strukturen entstehen.

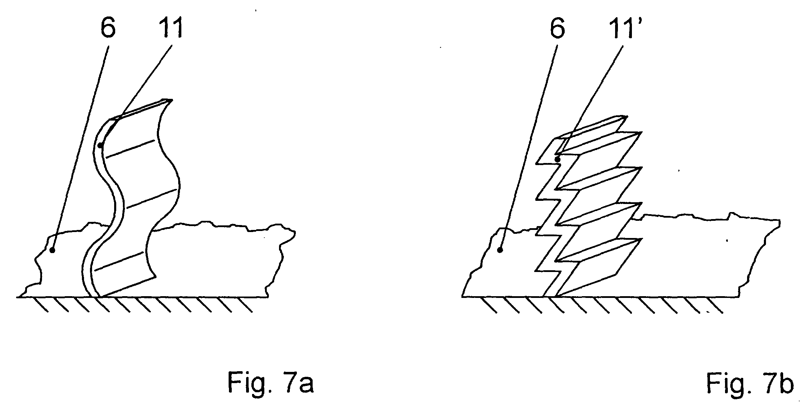

Mit dem Verfahren des Laser-Auftragsschweißens lassen sich, wie bereits erwähnt, auch Lamellen und diese in beliebigen Formen erstellen. Fig. 7a und Fig. 7b zeigen nun zwei mögliche Ausführungsvarianten von Lamellen 11, 11'. Dabei ermöglicht es dieses Verfahren, die Lamellen 11, 11' in der erwünschten Stärke von etwa 0,4 bis 0,6 mm so herzustellen, dass sie den Belastungen beim Ein- und Ausformvorgang dauerhaft standhalten können. Fig. 7a zeigt nun beispielhaft eine in geschwungener Form ausgeführte Lamelle 11 und Fig. 7b eine zickzackförmig gestuft ausgebildete Lamelle 11'. Die mit solchen Lamellen 11, 11' geformten Einschnitte im Laufstreifenprofil eines Reifens besitzen der Form der Lamellen entsprechende Wandstrukturen. Es ist bekannt, dass gerade die Strukturierung von Einschnitten, insbesondere bei Winterreifen, wo Laufstreifenprofile mit einer höheren Anzahl von solchen Einschnitten versehen werden, einen erheblichen Einfluss auf die Fahreigenschaften unter winterlichen Fahrbedingungen, beispielsweise das Traktions- und Bremsverhalten auf schneeigem und eisigem Untergrund, haben.

Die Erfindung ist auf die dargestellten und beschriebenen Ausführungsformen nicht eingeschränkt. so ist es beispielsweise möglich, an Stelle von Mikro-Schlitzen Mikro-Bohrungen vorzusehen. Die einzelnen dargestellten Varianten können bei ein- und derselben Reifenform realisiert werden bzw. beliebig miteinander kombiniert werden. Darüber hinaus ist es möglich, auch an den Seitenschalen von Reifenvulkanisationsformen Bereiche nach dem Laser- Auftragsschweißen zu bilden und mit Hohlräumen auszuführen. Dies wäre beispielsweise für jene Formbereiche von Vorteil, wo die Wulstbereiche des Reifens anliegen, um hier gesondert Heizmedium und damit Wärme zuführen zu können.

## Patentansprüche

1. Verfahren zum Herstellen einer aus Formsegmenten bestehenden Vulkanisationsform für Fahrzeugreifen mit Formteilen, wie Formrippen oder Lamellen, welche Strukturierungen am äußeren Bereich des Reifens, wie Nuten und Einschnitte im Laufstreifenprofil, formen, dadurch gekennzeichnet, dass Formteile (5, 5', 10, 11, 11'), welche Strukturierungen am Außenbereich des Reifens formen, auf einem Formsegment-Grundkörper (6) nach dem Verfahren des Laser-Auftragsschweißens aufgebaut bzw. erstellt werden.

2. Verfahren nach Anspruch 1, dadurch gekennzeichnet, dass größer dimensionierte Formteile, wie Nuten formende Formrippen (5, 5', 10), als innen hohle Teile aufgebaut werden.

3. Verfahren nach Anspruch 2, dadurch gekennzeichnet, dass die mit Hohlräumen (5a, 5b, 5'a, 5'b) versehenen Formrippen (5, 5', 10) an den Stirnseiten der Formsegmente bzw. der Formsegment-Grundkörper (6) geschlossen ausgeführt werden.

4. Verfahren nach einem der Ansprüche 1 bis 3, dadurch gekennzeichnet, dass die Formsegment-Grundkörper (6) mit Zu- bzw. Ableitungen (7, 7') versehen werden, die zur Versorgung der Hohlräume (5a, 5b, 5'a, 5'b) in den Formrippen (5, 5',10) mit einem gasförmigen oder einem flüssigen Medium vorgesehen sind.

5. Verfahren nach einem der Ansprüche 1 bis 4, dadurch gekennzeichnet, dass durch die Hohlräume (5a, 5'a, 5b, 5'b) und die Zu- bzw. Ableitungen (7) Bereiche von Versorgungskreisen gebildet werden.

6. Vulkanisationsform für Fahrzeugreifen mit Formsegmenten, die mit Formteilen, wie Formrippen oder Lamellen, zum Ausformen von Strukturierungen am Außenbereich des Reifens, wie Nuten oder Einschnitte im Laufstreifenprofil, versehen sind, dadurch gekennzeichnet, dass die Formsegmente jeweils aus einem Formsegment-Grundkörper (6) bestehen, auf welchem Formteile (5, 5', 10, 11, 11'), die Strukturierungen am Außenbereich des Reifens formen, durch Laser-Auftragsschweißen aufgebracht sind.

7. Vulkanisationsform nach Anspruch 6, dadurch gekennzeichnet, dass größer dimensionierte Formteile, wie Formrippen (5, 5',10), zumindest zum Teil mit Hohlräumen (5a, 5b, 5'a, 5'b) versehen sind.

8. Vulkanisationsform nach Anspruch 6 oder 7, dadurch gekennzeichnet, dass die Hohlräume (5a, 5b, 5'a, 5'b) über insbesondere durch den Formsegment-Grundkörper (6) verlaufende Zu- und Ableitungen (7, 7') mit flüssigen oder gasförmigen Medien befüllbar oder durchströmbar sind und in Versorgungskreise eingebunden sind.

9. Vulkanisationsform nach einem der Ansprüche 6 bis 8, dadurch gekennzeichnet, dass an den Stirnseiten der Formsegmente die Endbereiche von Formrippen (5, 5') geschlossen ausgeführt sind.

10. Vulkanisationsform nach einem der Ansprüche 6 bis 9, dadurch gekennzeichnet, dass Formrippen (5, 5') mit zwei voneinander durch eine insbesondere mittige Trennwand (9, 9') getrennten Hohlräumen (5a, 5b, 5'a, 5'b) vorgesehen sind.

11. Vulkanisationsform nach Anspruch 10, dadurch gekennzeichnet, dass die beiden Hohlräume (5a, 5b, 5'a, 5'b) zu demselben oder zu voneinander getrennten Versorgungskreisen gehören.

12. Vulkanisationsform nach einem der Ansprüche 6 bis 11, dadurch gekennzeichnet, dass am Kreuzungsbereich zweier Formrippen (5, 10) eine das zugeführte Medium in eine der Formrippen (5, 10) umleitende Trennwand (19) vorgesehen ist.

13. Vulkanisationsform nach einem der Ansprüche 6 bis 12, dadurch gekennzeichnet, dass die Hohlräume (5a, 5b, 5'a, 5'b) mit einem Heizmedium durchströmbar sind.

14. Vulkanisationsform nach einem der Ansprüche 6 bis 13, dadurch gekennzeichnet, dass die Hohlräume (5a, 5b, 5'a, 5'b) über Mikro- Öffnungen (8), die insbesondere als Schlitze ausgebildet sind und im Übergangsbereich der Formrippen (5, 5', 10) zum Formsegment- Grundkörper (6) angeordnet sind, mit der Formsegment- Innenseite in Verbindung sind.

15. Vulkanisationsform nach Anspruch 14, dadurch gekennzeichnet, dass die Mikro-Öffnungen (8) eine Breite von höchstens einigen Hundertstelmillimetern aufweisen.
